# FASCICULE DE BREVET EUROPEEN

(11) **EP 4 355 987 B1**
(45) Date de publication et mention de la délivrance du brevet: **29.04.2026**
(21) Numéro de dépôt: 22731652.8
(22) Date de dépôt: 02.06.2022
(51) Int. Cl.: F02C 7/042, F02K 1/66, F02K 1/76

(54) **ENTRÉE D'AIR D'ENSEMBLE PROPULSIF D'AÉRONEF COMPRENANT DES ORGANES MOBILES POUR FAVORISER UNE PHASE D'INVERSION DE POUSSÉE ET PROCÉDÉ D'UTILISATION D'UNE TELLE ENTRÉE D'AIR**
LUFTEINLASS FÜR EINE FLUGZEUGANTRIEBSEINHEIT MIT BEWEGLICHEN ELEMENTEN ZUR FÖRDERUNG EINER SCHUBUMKEHRPHASE UND VERFAHREN ZUR VERWENDUNG SOLCH EINES LUFTEINLASSES
AIR INLET FOR AN AIRCRAFT PROPULSION UNIT COMPRISING MOBILE MEMBERS FOR PROMOTING A THRUST REVERSAL PHASE, AND METHOD FOR USING SUCH AN AIR INLET

(30) Priorité: 13.06.2021 FR 2106215
(43) Date de publication de la demande: 24.04.2024
(73) Titulaire: SAFRAN AIRCRAFT ENGINES, 75015 Paris (FR)
(72) Inventeur: SOUVETON, Ulrick, 77550 MOISSY-CRAMAYEL (FR)
(74) Mandataire: Argyma
(86) Numéro de dépôt international: PCT/EP2022/065138
(87) Numéro de publication internationale: WO 2022/263203

(56) Documents cités:
- WO-A1-2020/212225
- FR-A1- 2 081 027
- FR-A1- 3 095 241
- US-A- 3 618 876

## Description

### DOMAINE TECHNIQUE

La présente invention concerne le domaine des ensembles propulsifs d'aéronef et vise plus particulièrement une entrée d'air d'ensemble propulsif d'aéronef.

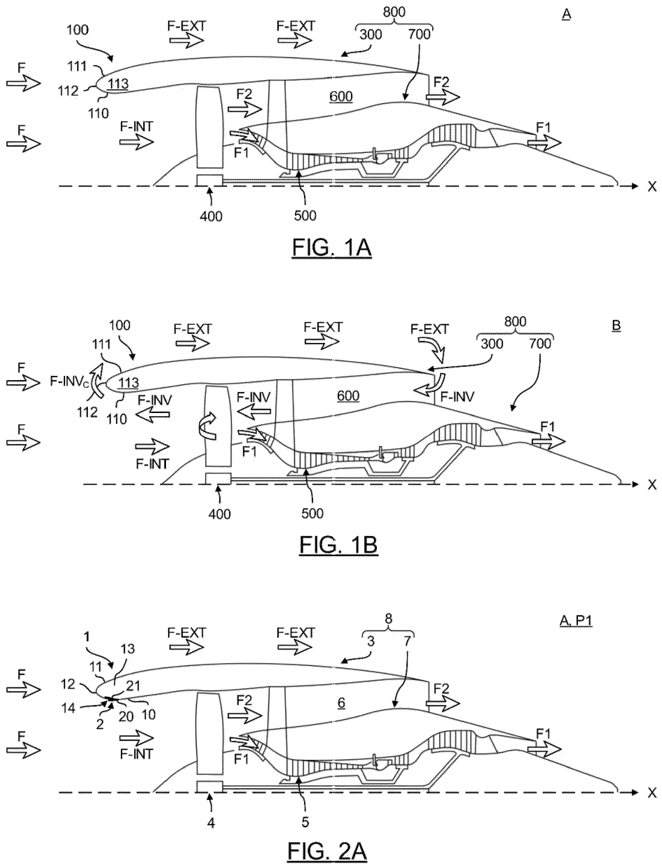

De manière connue, en référence à la figure 1A, un ensemble propulsif d'aéronef 800 s'étend selon un axe longitudinal X orienté d'amont en aval et comprend une turbomachine 700 et une nacelle 300. La turbomachine 700 s'étend selon l'axe longitudinal X et est configurée pour permettre la propulsion de l'aéronef à partir de l'accélération d'un flux d'air intérieur F-INT circulant d'amont en aval dans la turbomachine 700. La nacelle 300 s'étend quant à elle extérieurement autour de la turbomachine 700 selon l'axe longitudinal X et permet de guider le flux d'air intérieur F-INT dans la turbomachine 700. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

De manière connue, comme illustré sur la figure 1A, la turbomachine 700 est de type à double flux et comprend à l'amont une soufflante 400 montée rotative autour de l'axe longitudinal X pour accélérer le flux d'air intérieur F-INT d'amont en aval. La turbomachine 700 comprend également, en aval de la soufflante 400, une veine primaire 500 radialement intérieure et une veine secondaire 600 radialement extérieure, qui sont configurées pour guider respectivement une première partie du flux d'air intérieur F-INT, dite flux d'air primaire F1, pour la combustion du carburant, et une deuxième partie du flux d'air intérieur F-INT, dite flux d'air secondaire F2, afin de générer la poussée de la turbomachine 700.

De manière connue, toujours en référence à la figure 1A, la nacelle 300 s'étend de manière radialement extérieure à la soufflante 400 et délimite de manière radialement extérieure la veine secondaire 600. La nacelle 300 comprend à son extrémité amont une entrée d'air 100 délimitant une cavité annulaire 113 d'axe longitudinal X. L'entrée d'air 100 comprend une paroi intérieure 110 tournée vers l'axe longitudinal X et une paroi extérieure 111 opposée à la paroi intérieure 110, qui sont reliées ensemble à l'amont par une lèvre d'entrée d'air 112 comprenant un bord d'attaque. L'entrée d'air 100 possède un profil arrondi aérodynamique qui permet de séparer un flux d'air amont F en le flux d'air intérieur F-INT guidé par la paroi intérieure 110 et un flux d'air extérieur F-EXT guidé par la paroi extérieure 111.

En référence à la figure 1B, pour réduire la distance de freinage d'un aéronef, notamment lors de l'atterrissage, il est connu de modifier l'orientation du flux d'air dans la veine secondaire 600 de manière à réaliser une phase d'inversion de poussée B. On distingue par la suite une phase de poussée A (figure 1A) dans laquelle le flux d'air secondaire F2 circule d'amont en aval dans la veine secondaire 600 et une phase d'inversion de poussée B (figure 1B) dans laquelle y circule un flux d'air inverse F-INV d'aval en amont. On précise que lors d'une phase d'inversion de poussée B, un flux d'air intérieur F-INT provenant du flux d'air amont F circule d'amont en aval au pied de la soufflante 400 pour alimenter le flux d'air primaire F1 de même qu'en phase de poussée A. Le flux d'air primaire F1 peut également être alimenté par une partie du flux d'air inverse F-INV.

Pour réaliser la phase d'inversion de poussée, il est connu par la demande de brevet FR2120172A1 d'obstruer au moins partiellement la veine secondaire 600, en aval de la soufflante 400, et de conjointement découvrir des grilles non représentées logées dans la nacelle 300 afin de former le flux d'air inverse F-INV orienté inversement au flux d'air secondaire F2. Un tel système d'inversion de poussée présente toutefois l'inconvénient de pénaliser la masse, l'encombrement et la traînée de l'ensemble propulsif d'aéronef 800.

En référence à la figure 1B, il est également connu de prévoir une soufflante 400 à calage variable, connue sous sa dénomination anglaise « Variable Pitch Fan » d'abréviation « VPF », qui comprend des aubes dont l'angle de calage est piloté de manière à inverser le sens de circulation du flux d'air dans la veine secondaire 600. En pratique, lors d'une phase d'inversion de poussée B, le flux d'air inverse F-INV circule d'aval en amont dans la veine secondaire 600 puis traverse la soufflante 400 et est guidé vers l'amont par la paroi intérieure 110 de l'entrée d'air 100. Le flux d'air inverse F-INV s'oppose alors au flux d'air amont F, ce qui permet un freinage.

Dans les faits, il est observé que le flux d'air inverse F-INV reste attaché à l'entrée d'air 100 et forme un flux d'air inverse collé F-INV_{C} au niveau de l'entrée d'air 100, c'est-à-dire qu'il épouse le contour de l'entrée d'air 100 et rejoint le flux d'air extérieur F-EXT, au lieu de venir s'opposer au flux d'air amont F. Il en résulte une réduction indésirable du freinage et par suite une réduction des performances de l'ensemble propulsif d'aéronef 800 en phase d'inversion de poussée B. En outre, le flux d'air inverse F-INV, après avoir rejoint le flux d'air extérieur F-EXT, est admis de nouveau dans la veine secondaire 600 par l'extrémité aval de la nacelle 300, ce qui génère une boucle de flux d'air indésirable qui réduit l'efficacité de la phase d'inversion de poussée B.

Pour augmenter les performances de l'ensemble propulsif d'aéronef 800 lors d'une phase d'inversion de poussée B, il est connu par la demande de brevet FR1904092A1 de former des conduites internes dans l'entrée d'air 100 qui sont ouvertes lors de la phase d'inversion de poussée B pour détourner une partie du flux d'air inverse F-INV et favoriser son décollement. Il est également connu par la demande de brevet FR1904096A1 une entrée d'air élastiquement déformable pour modifier son profil lors d'une phase d'inversion de poussée B. De telles solutions présentent toutefois l'inconvénient de nécessiter une entrée d'air d'architecture complexe et coûteuse.

Il est également connu par les demandes de brevet FR1904087A1, FR1904094A1 et FR1904089A1 une entrée d'air 100 comprenant respectivement des organes de déviation, des aubes de redresseur et une portion mobile qui sont déployés lors d'une phase d'inversion de poussée B et escamotés lors d'une phase de poussée A. De telles solutions présentent toutefois l'inconvénient, en position escamotée, de présenter un encombrement interne important dans la cavité annulaire 113 de l'entrée d'air 100. En outre, de telles solutions nécessitent de former des logements dans la paroi intérieure 110 qui perturbent l'aérodynamisme en position déployée. Il est également connu par la demande de brevet FR3095241A1 une entrée d'air comprenant un organe de déviation.

L'invention vise ainsi une entrée d'air 100 d'ensemble propulsif d'aéronef 800 qui favorise les performances lors d'une phase d'inversion de poussée B, sans réduire celles lors d'une phase de poussée A, tout en présentant une architecture simple, économique et un encombrement limité.

### PRESENTATION DE L'INVENTION

Selon la revendication 1, l'invention concerne une entrée d'air de nacelle d'ensemble propulsif d'aéronef, ledit ensemble propulsif d'aéronef s'étendant selon un axe longitudinal orienté d'amont en aval et comprenant une turbomachine comprenant une veine primaire radialement intérieure et une veine secondaire radialement extérieure configurées pour guider d'amont en aval respectivement un flux d'air primaire et un flux d'air secondaire lors d'une phase de poussée, ladite turbomachine comprenant à l'amont une soufflante montée rotative autour de l'axe longitudinal, ledit ensemble propulsif d'aéronef comprenant des moyens d'inversion de poussée configurés pour modifier le flux d'air secondaire en un flux d'air inverse circulant d'aval en amont dans la veine secondaire lors d'une phase d'inversion de poussée, ladite nacelle s'étendant extérieurement autour de la turbomachine et comprenant à son extrémité amont l'entrée d'air, ladite entrée d'air comprenant une paroi intérieure tournée vers l'axe longitudinal, une paroi extérieure opposée à la paroi intérieure et une lèvre d'entrée d'air reliant à l'amont la paroi intérieure et la paroi extérieure.

L'invention est remarquable en ce que :
- la paroi intérieure comprend une pluralité d'ouvertures comprenant une extrémité amont et une extrémité aval, et
- l'entrée d'air comprend une pluralité d'organes mobiles, un organe mobile étant monté pivotant dans chaque ouverture, chaque organe mobile comprenant une paroi de couverture et une paroi de déviation opposée à la paroi de couverture et étant configuré pour pivoter entre :
   ∘ une position de couverture, dans laquelle la paroi de couverture est tournée vers l'axe longitudinal, obstrue l'ouverture et s'étend dans le prolongement de la paroi intérieure de manière à guider le flux d'air secondaire afin de favoriser une phase de poussée, et
   ∘ une position de déviation, dans laquelle la paroi de déviation est tournée vers l'axe longitudinal, obstrue l'ouverture et est configurée pour décoller le flux d'air inverse afin de favoriser une phase d'inversion de poussée.

Grâce à la pluralité d'organes mobiles, l'entrée d'air possède une géométrie variable. Les performances en phase d'inversion de poussée de l'ensemble propulsif d'aéronef sont avantageusement améliorées, sans réduire celles en phase de poussée. En effet, les organes mobiles en position de déviation permettent avantageusement de décoller le flux d'air inverse de la paroi intérieure, de sorte qu'il s'oppose au flux d'air amont et génère un effort de freinage efficace. Le flux d'air inverse ainsi décollé ne reste pas attaché à la nacelle ce qui évite de le réadmettre au niveau de son extrémité aval dans la veine secondaire et de générer une boucle de flux d'air parasite. Si la position de déviation favorise l'inversion de poussée, la position de couverture des organes mobiles permet quant à elle de reproduire le profil aérodynamique de l'entrée d'air en phase de poussée, en obstruant les ouvertures dans la continuité de la paroi intérieure.

De manière avantageuse, en position de déviation, les organes mobiles permettent en outre d'obstruer les ouvertures de même qu'en position de couverture. Aucun flux d'air parasite ne circule dans l'entrée d'air ce qui favorise l'aérodynamisme, améliore le dégivrage et renforce la pérennité de l'entrée d'air. L'obstruction des ouvertures dans les deux positions est avantageusement permise par des organes mobiles à deux parois opposées, chaque paroi permettant d'obstruer l'ouverture dans une position. Une telle architecture est simple, économique et comporte un encombrement réduit car les organes mobiles sont montés pivotants pour se déplacer d'une position à l'autre.

Selon un aspect préféré, au moins deux des ouvertures sont distinctes. Autrement dit, les organes mobiles sont montés chacun dans une ouverture donnée séparée des autres par une paroi fixe. Ceci favorise la robustesse et la pérennité de l'entrée d'air.

Selon un autre aspect préféré, au moins deux des ouvertures sont adjacentes de manière à communiquer entre elles et former une ouverture globale dans laquelle sont montés au moins deux organes mobiles. Au moins deux des organes mobiles sont montés adjacents de manière à favoriser la déviation du flux d'air inverse. De préférence, l'ouverture globale est annulaire. Ceci permet une déviation circonférentielle continue du flux d'air inverse.

De préférence, les ouvertures sont alignées transversalement par rapport à l'axe longitudinal. Autrement dit, un plan transversal à l'axe longitudinal traverse toutes les ouvertures. Plus précisément, un plan transversal à l'axe longitudinal traverse toutes les extrémités amont des ouvertures. Un autre plan transversal à l'axe longitudinal traverse toutes les extrémités aval des ouvertures. De préférence, les ouvertures sont équiréparties sur la circonférence de la paroi intérieure. Ceci permet une déviation homogène du flux d'air inverse.

Selon un aspect de l'invention, chaque organe mobile comprend une extrémité de décollement reliant la paroi de couverture et la paroi de déviation, ladite extrémité de décollement étant configurée, en position de déviation, pour s'étendre de manière radialement intérieure par rapport à la paroi intérieure. Autrement dit, l'extrémité de décollement ne s'étend pas dans le prolongement de la paroi intérieure mais pointe vers l'axe longitudinal. Ceci permet d'éloigner de la paroi intérieure le flux d'air inverse guidé par la paroi de déviation, ce qui permet son décollement.

De préférence, l'extrémité de décollement est incurvée vers l'intérieur pour favoriser le décollement.

De préférence, l'extrémité de décollement est configurée, en position de déviation, pour s'étendre en saillie vers l'amont par rapport à l'ouverture. Autrement dit, l'extrémité de décollement s'étend au-delà de l'ouverture, vers l'amont. Ceci permet de décoller progressivement le flux d'air inverse de la paroi intérieure tout en préservant l'aérodynamisme de l'entrée d'air.

Selon un aspect de l'invention, l'extrémité de décollement comporte une forme pointue. De préférence, l'extrémité de décollement s'étend selon un angle inférieur à 30°. Ceci permet de favoriser le décollement et d'éviter que le flux d'air inverse ne contourne l'extrémité de décollement.

Selon un aspect de l'invention, l'extrémité de décollement est configurée, en position de couverture, pour s'étendre de manière adjacente à l'extrémité aval. De manière avantageuse, en position de couverture, l'extrémité de décollement assure la continuité entre la paroi intérieure et la paroi de couverture et favorise l'aérodynamisme. L'extrémité de décollement assure ainsi avantageusement deux fonctions différentes suivant qu'elle est en position de couverture ou de déviation.

Selon un aspect de l'invention, chaque organe mobile comprend une extrémité de blocage qui relie la paroi de couverture et la paroi de déviation, ladite extrémité de blocage étant configurée pour coopérer avec l'extrémité amont en position de couverture et avec l'extrémité aval en position de déviation. De manière avantageuse, l'extrémité de blocage borne de manière simple et pratique le déplacement de l'organe mobile entre la position de couverture et la position de déviation.

Selon un aspect de l'invention, l'extrémité de blocage est configurée pour se déplacer de manière radialement extérieure à la paroi intérieure entre la position de couverture et la position de déviation. Autrement dit, l'entrée d'air comprenant une cavité annulaire d'axe longitudinal délimitée par la paroi intérieure, la paroi extérieure et la lèvre d'entrée d'air, l'extrémité de blocage s'étend dans ladite cavité annulaire. Ceci permet de limiter le pivotement de l'organe mobile dans un sens donné à un demi-tour. Ceci permet également de protéger l'extrémité de blocage du flux d'air intérieur et du flux d'air inverse pour éviter tout déplacement non souhaité de l'organe mobile.

De préférence, l'extrémité de blocage comporte une première rainure formée du côté de la paroi de couverture et configurée pour coopérer par complémentarité de formes avec l'extrémité amont. Ceci permet de maintenir l'organe mobile en position de couverture, avec notamment l'extrémité de décollement dans le prolongement de la paroi intérieure pour favoriser l'aérodynamisme.

De préférence, l'extrémité de blocage comporte une deuxième rainure formée du côté de la paroi de déviation et configurée pour coopérer par complémentarité de formes avec l'extrémité aval de l'ouverture. Ceci permet de maintenir l'organe mobile en position de décollement et d'éviter que l'extrémité de décollement ne vienne en appui contre l'extrémité amont, pour favoriser sa pérennité.

Selon un aspect de l'invention, chaque organe mobile est monté mobile autour d'un pivot d'axe de pivotement tangent à la paroi intérieure et appartenant à un plan transversal à l'axe longitudinal. Ceci permet d'utiliser la force du flux d'air intérieur et du flux d'air inverse pour faciliter le déplacement de l'organe mobile entre la position de couverture et la position de déviation.

Selon un aspect de l'invention, l'organe mobile s'étend de part et d'autre du pivot. Ceci permet de passer d'une position à l'autre par simple retournement de l'organe mobile dans l'ouverture.

De préférence, le pivot est monté plus proche de l'extrémité amont que de l'extrémité aval de l'ouverture. De préférence, le pivot est équidistant de l'extrémité de décollement et de l'extrémité de blocage. Ceci permet à l'extrémité de décollement de s'étendre en saillie de l'ouverture et ainsi favoriser le décollement. De telles caractéristiques permettent de favoriser un basculement de manière passive lors du fonctionnement de la turbomachine.

L'invention concerne également une nacelle d'ensemble propulsif d'aéronef, ledit ensemble propulsif d'aéronef s'étendant selon un axe longitudinal orienté d'amont en aval et comprenant une turbomachine comprenant une veine primaire radialement intérieure et une veine secondaire radialement extérieure configurées pour guider d'amont en aval respectivement un flux d'air primaire et un flux d'air secondaire lors d'une phase de poussée, ladite turbomachine comprenant à l'amont une soufflante montée rotative autour de l'axe longitudinal, ledit ensemble propulsif d'aéronef comprenant des moyens d'inversion de poussée configurés pour modifier le flux d'air secondaire en un flux d'air inverse circulant d'aval en amont dans la veine secondaire lors d'une phase d'inversion de poussée, ladite nacelle s'étendant extérieurement autour de la turbomachine et comprenant à son extrémité amont une entrée d'air telle que décrite précédemment.

L'invention concerne en outre un ensemble propulsif d'aéronef s'étendant selon un axe longitudinal orienté d'amont en aval et comprenant une turbomachine comprenant une veine primaire radialement intérieure et une veine secondaire radialement extérieure configurées pour guider d'amont en aval respectivement un flux d'air primaire et un flux d'air secondaire lors d'une phase de poussée, ladite turbomachine comprenant à l'amont une soufflante montée rotative autour de l'axe longitudinal, ledit ensemble propulsif d'aéronef comprenant des moyens d'inversion de poussée configurés pour modifier le flux d'air secondaire en un flux d'air inverse circulant d'aval en amont dans la veine secondaire lors d'une phase d'inversion de poussée, ladite nacelle s'étendant extérieurement autour de la turbomachine et comprenant à son extrémité amont une entrée d'air telle que décrite précédemment.

De préférence, la soufflante comporte des aubes à calage variable de manière à former les moyens d'inversion de poussée. De tels moyens d'inversion de poussée sont efficaces et présentent un encombrement et une masse limités. De tels moyens d'inversion de poussée sont adaptés pour une turbomachine ayant un grand diamètre et un fort taux de dilution.

Selon la revendication 10, l'invention concerne par ailleurs un procédé d'utilisation d'une entrée d'air d'ensemble propulsif d'aéronef telle que décrite précédemment, dans laquelle chaque organe mobile est initialement en position de couverture de manière à guider le flux d'air secondaire afin de favoriser une phase de poussée, ledit procédé comprenant, lors d'une phase d'inversion de poussée, un déplacement de chaque organe mobile en position de déviation de manière à décoller le flux d'air inverse.

Un tel procédé est avantageusement simple et rapide à mettre en œuvre, par simple pivotement de l'organe mobile et est répétable. De préférence, le déplacement est mis en œuvre par au moins un organe commandable actif. De préférence, le déplacement est mis en œuvre de manière synchronisée pour chaque organe mobile.

Il est également décrit un procédé d'utilisation d'une entrée d'air d'ensemble propulsif d'aéronef telle que décrite précédemment, dans laquelle chaque organe mobile est initialement en position de déviation de manière à décoller le flux d'air inverse afin de favoriser une phase d'inversion de poussée, ledit procédé comprenant, lors d'une phase de poussée, un déplacement de chaque organe mobile en position de couverture de manière à guider le flux d'air secondaire.

De préférence, le déplacement de chaque organe mobile est mis en œuvre de manière passive, par l'action du flux d'air intérieur sur l'extrémité de décollement.

Il est également décrit un procédé d'utilisation d'un ensemble propulsif d'aéronef tel que décrit précédemment, ladite turbomachine étant initialement en phase de poussée dans laquelle circule un flux d'air secondaire d'amont en aval, chaque organe mobile de l'entrée d'air étant initialement en position de couverture de manière à guider le flux d'air secondaire, procédé dans lequel, lors d'une phase d'inversion de poussée de la turbomachine, les moyens d'inversion de poussée sont configurés pour modifier le flux d'air secondaire en un flux d'air inverse circulant d'aval en amont et chaque organe mobile est déplacé en position de déviation de manière à décoller le flux d'air inverse.

Il est également décrit un procédé d'utilisation d'un ensemble propulsif d'aéronef tel que décrit précédemment, ladite turbomachine étant initialement en phase d'inversion de poussée dans laquelle circule un flux d'air inverse d'aval en amont, chaque organe mobile de l'entrée d'air étant initialement en position de déviation de manière à décoller le flux d'air inverse, procédé dans lequel, lors d'une phase de poussée de la turbomachine, les moyens d'inversion de poussée sont configurés pour modifier le flux d'air inverse en un flux d'air secondaire circulant d'amont en aval et chaque organe mobile est déplacé en position de couverture de manière à guider le flux d'air secondaire.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1A et
   La figure 1B sont des représentations schématiques en demi-coupe longitudinale d'un ensemble propulsif d'aéronef selon l'art antérieur respectivement lors d'une phase de poussée et lors d'une phase d'inversion de poussée ;
La figure 2A et
   La figure 2B sont des représentations schématiques en demi-coupe longitudinale d'un ensemble propulsif d'aéronef selon une forme de réalisation de l'invention respectivement lors d'une phase de poussée et lors d'une phase d'inversion de poussée ;
La figure 3A et
   La figure 3B sont des représentations schématiques en perspective de l'entrée d'air de l'ensemble propulsif d'aéronef de la figure 2A et de la figure 2B respectivement lors d'une phase de poussée et lors d'une phase d'inversion de poussée ;
La figure 4 est une représentation schématique en perspective d'un organe mobile de l'entrée d'air de la figure 3A et de la figure 3B ;
La figure 5A et
   La figure 5B sont des représentations schématiques en demi-coupe longitudinale de l'entrée d'air de la figure 3A et de la figure 3B avec un organe mobile respectivement en position de couverture et en position de déviation ;
La figure 5C et
   La figure 5D sont des représentations schématiques en coupe longitudinale de l'entrée d'air de la figure 3A et de la figure 3B respectivement en position de couverture et en position de déviation ;
La figure 6A,
   La figure 6B et
   La figure 6C sont des représentations schématiques du déplacement d'un organe mobile entre la position de couverture et la position de déviation selon un mode de réalisation du procédé d'utilisation de l'entrée d'air de la figure 3A et de la figure 3B de l'invention ; et
La figure 7A et
   La figure 7B sont des représentations schématiques du déplacement d'un organe mobile entre la position de couverture et la position de déviation selon un autre mode de réalisation du procédé d'utilisation de l'entrée d'air de la figure 3A et de la figure 3B.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

### Ensemble propulsif d'aéronef

Comme illustré sur la figure 2A et décrit précédemment, l'invention concerne un ensemble propulsif d'aéronef 8 s'étendant selon un axe longitudinal X orienté d'amont en aval et comprenant une turbomachine 7 et une nacelle 3. La turbomachine 7 s'étend selon l'axe longitudinal X et est configurée pour permettre la propulsion de l'aéronef à partir de l'accélération d'un flux d'air intérieur F-INT circulant d'amont en aval dans la turbomachine 7. La nacelle 3 s'étend quant à elle extérieurement autour de la turbomachine 7 selon l'axe longitudinal X et permet de guider le flux d'air intérieur F-INT dans la turbomachine 7. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

Toujours en référence à la figure 2A et comme décrit précédemment, la turbomachine 7 est de type à double flux et comprend à l'amont une soufflante 4 montée rotative autour de l'axe longitudinal X pour accélérer le flux d'air intérieur F-INT d'amont en aval. La turbomachine 7 comprend également, en aval de la soufflante 4, une veine primaire 5 radialement intérieure et une veine secondaire 6 radialement extérieure, qui sont configurées pour guider respectivement une première partie du flux d'air intérieur F-INT, dite flux d'air primaire F1, pour la combustion du carburant, et une deuxième partie du flux d'air intérieur F-INT, dite flux d'air secondaire F2, afin de générer la poussée de la turbomachine 7.

Toujours en référence à la figure 2A et comme décrit précédemment, la nacelle 3 s'étend de manière radialement extérieure à la soufflante 4 et délimite de manière radialement extérieure la veine secondaire 6. La nacelle 3 comprend à son extrémité amont une entrée d'air 1 délimitant une cavité annulaire 13 d'axe longitudinal X. L'entrée d'air 1 comprend une paroi intérieure 10 tournée vers l'axe longitudinal X et une paroi extérieure 11 opposée à la paroi intérieure 10, qui sont reliées ensemble à l'amont par une lèvre d'entrée d'air 12 comprenant un bord d'attaque. L'entrée d'air 1 permet de séparer un flux d'air amont F en le flux d'air intérieur F-INT guidé par la paroi intérieure 10 et un flux d'air extérieur F-EXT guidé par la paroi extérieure 11.

### Phases de poussée A et d'inversion de poussée B

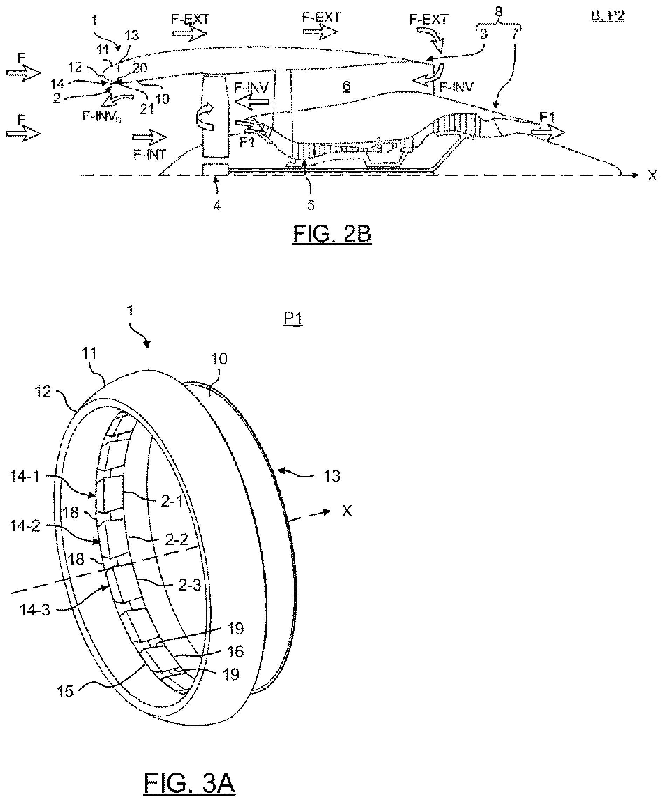

Comme illustré sur la figure 2B et décrit précédemment, pour réduire la distance de freinage d'un aéronef, notamment lors de l'atterrissage, l'ensemble propulsif d'aéronef 8 comprend en outre des moyens d'inversion de poussée afin de modifier l'orientation du flux d'air dans la veine secondaire 6. On distingue par la suite une phase de poussée A (figure 2A) dans laquelle le flux d'air secondaire F2 circule d'amont en aval dans la veine secondaire 6 et une phase d'inversion de poussée B (figure 2B) dans laquelle y circule un flux d'air inverse F-INV d'aval en amont. On précise que lors d'une phase d'inversion de poussée B, un flux d'air intérieur F-INT provenant du flux d'air amont F circule d'amont en aval au pied de la soufflante 4 pour alimenter le flux d'air primaire F1 de même qu'en phase de poussée A. Le flux d'air primaire F1 peut également être alimenté par une partie du flux d'air inverse F-INV.

Dans l'exemple de la figure 2B, les moyens d'inversion de poussée sont formés par la soufflante 4, qui est de type à calage variable, connue sous sa dénomination anglaise « Variable Pitch Fan » d'abréviation « VPF ». Une telle soufflante 4 à calage variable comprend des aubes dont l'angle de calage est piloté (voir figure 2B) de manière à inverser le sens de circulation du flux d'air dans la veine secondaire 6. En pratique, lors d'une phase d'inversion de poussée B, le flux d'air inverse F-INV circule d'aval en amont dans la veine secondaire 6 puis traverse la soufflante 4 et est guidé vers l'amont par la paroi intérieure 10 de l'entrée d'air 1. Le flux d'air inverse F-INV s'oppose alors au flux d'air amont F, ce qui permet un freinage.

Il va de soi que les moyens d'inversion de poussée pourraient se présenter sous une autre forme que celle décrite dans cet exemple. A titre d'exemple, il est connu par la demande de brevet FR2120172A1 d'obstruer au moins partiellement la veine secondaire 6, en aval de la soufflante 4, et de conjointement découvrir des grilles non représentées logées dans la nacelle 3 afin de former le flux d'air inverse F-INV orienté inversement au flux d'air secondaire F2. Un tel système d'inversion de poussée présente toutefois une masse et un encombrement supérieurs à la soufflante 4 à calage variable.

### Entrée d'air à géométrie variable

En référence aux figures 2A et 2B, selon l'invention, l'entrée d'air 1 est de type à géométrie variable, c'est-à-dire qu'elle comporte un profil adapté pour une phase de poussée A et un autre profil adapté pour une phase d'inversion de poussée B. Plus précisément, selon l'invention, l'entrée d'air 1 comprend des ouvertures 14 formées dans la paroi intérieure 10 et des organes mobiles 2. Un organe mobile 2 est monté pivotant dans chaque ouverture 14. Chaque organe mobile 2 comprend une paroi de couverture 20 et une paroi de déviation 21 opposée à la paroi de couverture 20 et est configuré pour pivoter entre :
- une position de couverture P1 (figure 2A), dans laquelle la paroi de couverture 20 est tournée vers l'axe longitudinal X, obstrue l'ouverture 14 et s'étend dans le prolongement de la paroi intérieure 10 de l'entrée d'air 1 de manière à guider le flux d'air secondaire F2 afin de favoriser une phase de poussée A, et
- une position de déviation P2 (figure 2B), dans laquelle la paroi de déviation 21 est tournée vers l'axe longitudinal X, obstrue l'ouverture 14 et est configurée pour décoller le flux d'air inverse F-INV afin de favoriser une phase d'inversion de poussée B.

Comme illustré sur la figure 2B, les organes mobiles 2 en position de déviation P2 permettent avantageusement de former un flux d'air inverse dévié F-INV_{D} au niveau de l'entrée d'air 1, qui est décollé de la paroi intérieure 10 contrairement à l'art antérieur. Un tel flux d'air inverse dévié F-INV_{D} vient s'opposer au flux d'air amont F ce qui améliore l'inversion de poussée B contrairement au flux d'air inverse collé F-INV_{C} de l'art antérieur (voir figure 1B) indésirable.

### Ouvertures

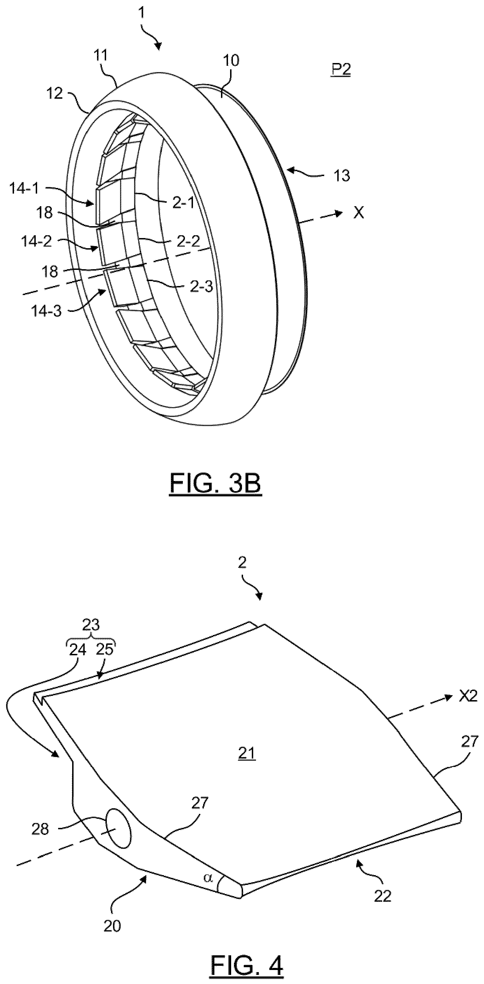

Dans l'exemple des figures 3A et 3B, l'entrée d'air 1 comprend vingt ouvertures 14-1, 14-2, 14-3. Les ouvertures 14-1, 14-2, 14-3 sont alignées transversalement par rapport à l'axe longitudinal X. Ainsi, un même plan transversal traverse chaque ouverture 14-1, 14-2, 14-3. Les ouvertures 14-1, 14-2, 14-3 sont de plus espacées les unes des autres, et dans cet exemple, équiréparties sur la circonférence de la paroi intérieure 10. Ainsi, la paroi intérieure 10 comprend des lames fixes 18 s'étendant chacune entre deux ouvertures 14 consécutives. Les lames fixes 18 s'étendent longitudinalement par rapport à l'axe longitudinal X et relient la paroi intérieure 10 s'étendant respectivement en amont et en aval des ouvertures 14.

Toujours dans l'exemple des figures 3A et 3B, un unique organe mobile 2 est monté dans chacune des ouvertures 14, de sorte que l'entrée d'air 1 comprend le même nombre d'organes mobiles 2 que d'ouvertures 14. De même que les ouvertures 14, les organes mobiles 2 sont montés alignés dans un plan transversal à l'axe longitudinal X, sont espacés les uns des autres et, dans cet exemple, équirépartis sur la circonférence de la paroi intérieure 10. Une telle entrée d'air 1 permet avantageusement un décollement global et homogène du flux d'air inverse F-INV lors d'une phase d'inversion de poussée B. Les organes mobiles 2 sont en outre aisément pivotables sans contact ni gêne mutuelle.

On précise que le nombre d'ouvertures 14, égal à vingt dans cet exemple, est quelconque dans le cadre de l'invention. De préférence, le nombre d'ouvertures 14 est supérieur à dix pour un décollement suffisant et inférieur à quarante pour limiter la complexité. Par ailleurs, il va de soi que les ouvertures 14 peuvent être positionnées différemment sur la paroi intérieure 10. A titre d'exemples, les ouvertures 14 pourraient être disposées en quinconce au lieu d'être alignées. Les ouvertures 14 pourraient également être plus proches les unes des autres sur une portion angulaire de la paroi intérieure 10 pour renforcer localement le décollement. Les ouvertures 14 pourraient notamment être adjacentes, à savoir communiquer entre elles et former ensemble une ouverture globale, sur toute ou une portion angulaire de la paroi intérieure 10 pour un décollement continu. On précise qu'aucune lame fixe 18 ne s'étend entre des ouvertures 14 adjacentes et que les organes mobiles 2 associés sont montés adjacents dans la même ouverture globale.

De préférence, comme illustré sur les figures 3A et 3B, les ouvertures 14 sont identiques entre elles, à savoir de même forme et de même taille. Ceci permet d'utiliser des organes mobiles 2 identiques entre eux, de forme et de taille standardisée, permettant une fabrication en grande série. La taille des ouvertures 14 est définie en fonction du diamètre de la paroi intérieure 10 de l'entrée d'air 1 et du nombre d'ouvertures 14. Concernant leur forme, chaque ouverture 14 comprend une extrémité amont 15 et une extrémité aval 16 (voir figure 3A) de manière à coopérer avec l'organe mobile 2, comme ce sera vu par la suite. Dans l'exemple des figures 3A et 3B, l'extrémité amont 15 et l'extrémité aval 16 s'étendent chacune dans un plan transversal à l'axe longitudinal X. L'extrémité amont 15 et l'extrémité aval 16 sont reliées par des extrémités latérales 19 incurvées (voir figure 3A) de manière à ce que l'ouverture 14 comporte une largeur circonférentielle variable selon l'axe longitudinal X, minimale au niveau de l'extrémité amont 15 et de l'extrémité aval 16 et maximale entre celles-ci. Une telle forme permet de favoriser la coopération avec l'organe mobile 2 ainsi que l'obstruction de l'ouverture 14 par l'organe mobile 2, comme ce sera vu par la suite. Il va de soi que les ouvertures 14 peuvent comprendre une forme différente, telle qu'une largeur circonférentielle constante selon l'axe longitudinal X.

### Organes mobiles

On décrit par la suite un organe mobile 2 puis sa coopération avec l'ouverture 14, cette description étant valable pour chaque organe mobile 2.

En référence à la figure 4, l'organe mobile 2 comporte une ouverture traversante 28 s'étendant selon un axe de pivotement X2, de manière à pouvoir être monté pivotant autour d'un pivot s'étendant selon ledit axe de pivotement X2. L'organe mobile 2 comprend également une paroi de couverture 20 et une paroi de déviation 21, opposée à la paroi de couverture 20, qui s'étendent de part et d'autre de l'ouverture traversante 28 longitudinalement par rapport à l'axe de pivotement X2. La paroi de couverture 20 comporte une forme convexe reproduisant le profil de la paroi intérieure 10 de l'entrée d'air 1. La paroi de déviation 21 comporte quant à elle une forme concave pour dévier le flux d'air inverse F-INV.

Comme illustré sur la figure 4, l'organe mobile 2 comprend également une extrémité de décollement 22 et une extrémité de blocage 23 reliant de part et d'autre la paroi de couverture 20 et la paroi de déviation 21 et s'étendant longitudinalement par rapport à l'axe de pivotement X2. De plus, l'organe mobile 2 comprend des parois latérales 27 s'étendant transversalement par rapport à l'axe longitudinal X et traversées par l'ouverture traversante 28. Les parois latérales 27 relient la paroi de couverture 20, la paroi de déviation 21, l'extrémité de décollement 22 et l'extrémité de blocage 23.

En référence à la figure 4, l'extrémité de déviation 22 comporte une forme pointue, d'angle α préférentiellement inférieur à 30°, de manière à décoller efficacement le flux d'air inverse F-INV. L'extrémité de blocage 23 est quant à elle configurée pour coopérer avec l'extrémité amont 15 et avec l'extrémité aval 16 de l'ouverture 14. Dans cet exemple, l'extrémité de blocage 23 comporte une première rainure 24, formée du côté de la paroi de couverture 20 et configurée pour coopérer par complémentarité de formes avec l'extrémité amont 15 de l'ouverture 14, ainsi qu'une deuxième rainure 25, formée du côté de la paroi de déviation 21 et configurée pour coopérer par complémentarité de formes avec l'extrémité aval 16 de l'ouverture 14. Il va de soi que l'extrémité de blocage 23 pourrait coopérer de manière différente avec l'extrémité amont 15 et/ou l'extrémité aval 16 de l'ouverture 14. Toujours dans cet exemple, les parois latérales 27 comportent de préférence une forme identique aux extrémités latérales 19 de l'ouverture 14. Ceci permet à l'organe mobile 2 d'obstruer l'ouverture 14 en position de couverture P1 comme en position de déviation P2.

Comme illustré sur la figure 4, l'organe mobile 2 s'étend de part et d'autre de l'ouverture traversante 28. De préférence, l'ouverture traversante 28 est sensiblement centrale, c'est-à-dire qu'elle est aussi proche de l'extrémité de déviation 22 que de l'extrémité de blocage 23. Le terme « sensiblement » signifie ici qu'un écart de 10% est toléré. Cela permet avantageusement un basculement passif comme cela sera présenté par la suite.

De préférence, l'organe mobile 2 est monobloc, à savoir issu de même matière, pour assurer sa robustesse et sa pérennité. De préférence, l'organe mobile 2 comporte un matériau composite de bonne tenue mécanique. Toujours de préférence, l'organe mobile 2 est obtenu par usinage ou par impression 3D.

### Positions de couverture P1 et de déviation P2

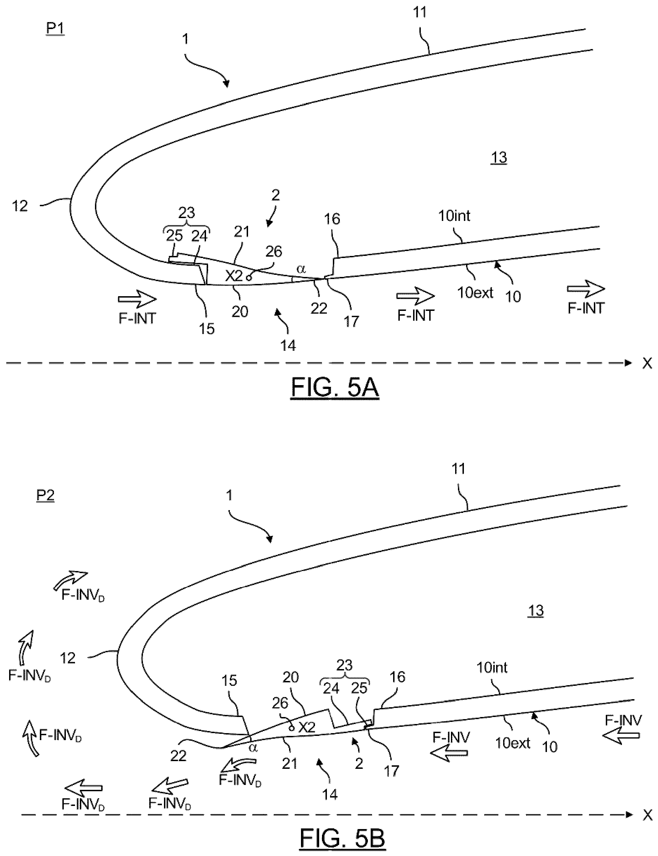

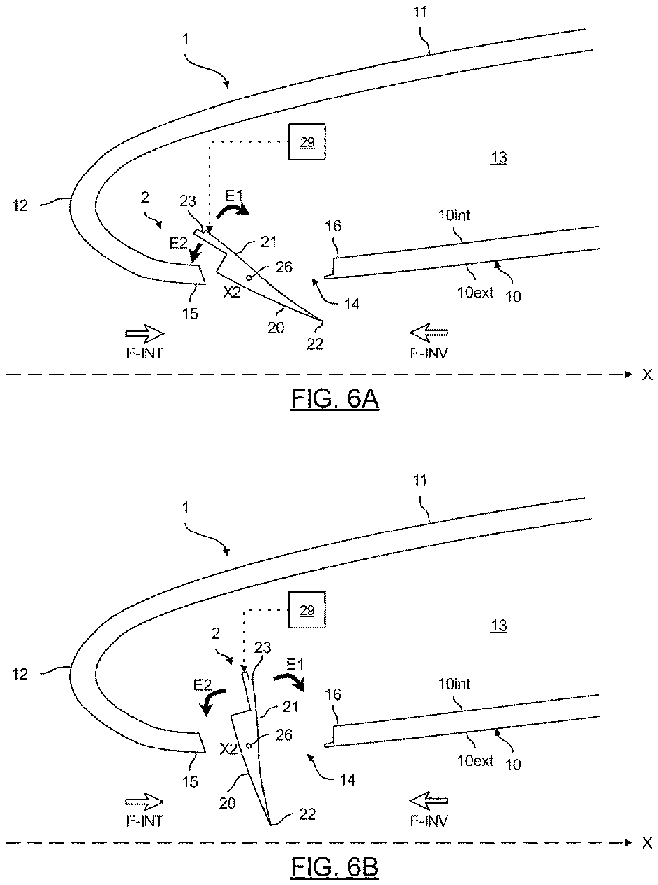

En référence à la figure 5A et à la figure 5B, l'organe mobile 2 est monté mobile dans l'ouverture 14 autour d'un pivot 26 tangent à la paroi intérieure 10 et appartenant à un plan transversal à l'axe longitudinal X. Ceci permet avantageusement d'utiliser la force du flux d'air intérieur F-INT et du flux d'air inverse F-INV, circulant longitudinalement, pour faciliter le déplacement de l'organe mobile 2. Dans cet exemple, le pivot 26 est décentré vers l'amont dans l'ouverture 14 pour favoriser un basculement lors de la phase d'inversion de poussée B comme ce sera vu par la suite. Selon un aspect, comme illustré sur la figure 6A à 6C, le pivot 26 est relié à un organe de commandement actif 29, tel qu'un actionneur, pour déplacer l'organe mobile 2, de manière complémentaire ou non à la force du flux d'air. Ainsi, la position de l'organe mobile 2 peut être commandée de manière pratique pour obtenir un décollement.

Comme illustré sur les figures 5A et 5B, l'extrémité de blocage 23 de l'organe mobile 2 est plus éloignée du pivot 26 que les extrémités amont 15 et aval 16 de l'ouverture 14 afin de limiter la rotation de l'organe mobile 2 entre la position de couverture P1 et la position de déviation P2. Ceci permet de maintenir l'extrémité de blocage 23 à l'intérieur de la cavité annulaire 13 et l'extrémité de déviation 22 à l'extérieur de la cavité annulaire 13 dans le flux d'air intérieur F-INT. Autrement dit, la rotation de l'organe mobile 2 est limitée à un demi-tour grâce au contact de l'extrémité de blocage 23 sur la paroi intérieure 10.

De préférence, le pivot 26 est commun à plusieurs organes mobiles 2, et de préférence comporte une forme annulaire d'axe longitudinal X pour être commun à tous les organes mobiles 2, afin de les déplacer simultanément. Un tel pivot 26 permet de faciliter la commande groupée d'une pluralité d'organes mobiles 2.

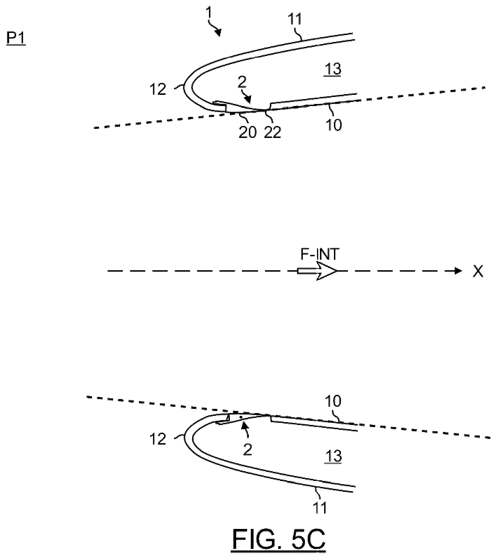

Comme illustré sur la figure 5A, dans la position de couverture P1, la paroi de couverture 20 est tournée vers l'axe longitudinal X et obstrue l'ouverture 14 dans le prolongement de la paroi intérieure 10, pour préserver l'aérodynamisme de l'entrée d'air 1 en phase de poussée A. L'extrémité de blocage 23 s'étend en appui radial orienté vers l'intérieur sur une face interne 10int de la paroi intérieure 10. Plus précisément, la première rainure 24 de l'extrémité de blocage 23 coopère par complémentarité de formes avec l'extrémité amont 15 de l'ouverture 14. Ceci permet de maintenir l'organe mobile 2 en position de couverture P1. L'extrémité de déviation 22 s'étend quant à elle dans le prolongement d'une face extérieure 10ext de la paroi intérieure 10. L'extrémité de déviation 22 assure plus précisément la continuité entre la paroi de couverture 20 et l'extrémité aval 16 de l'ouverture 14. Comme illustré sur la figure 5C, dans la position de couverture P1, l'entrée d'air 1 comporte une section intérieure divergente pour le flux d'air intérieur F-INT circulant d'amont en aval ainsi qu'un profil lisse évitant le décollement des lignes de flux.

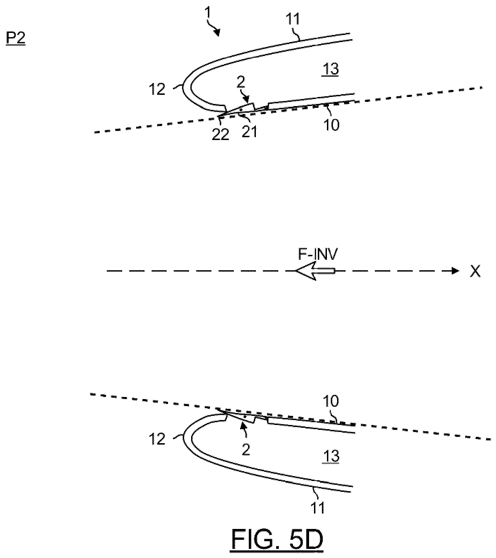

Comme illustré sur la figure 5B, dans la position de déviation P2, la paroi de déviation 21 est tournée vers l'axe longitudinal X et l'extrémité de décollement 22 s'étend en saillie vers l'amont et vers l'intérieur par rapport à l'ouverture 14, grâce au montage décentré du pivot 26. La forme concave de la paroi de déviation 21 et la forme pointue de l'extrémité de décollement 22 permettent de décoller efficacement le flux d'air inverse F-INV de la paroi intérieure 10, tout en préservant l'aérodynamisme. En outre, la paroi de déviation 21 obstrue l'ouverture 14 dans la position de déviation P2, ce qui évite la circulation d'air dans l'entrée d'air 1. Cela contribue à garantir l'aérodynamisme et ne perturbe pas le dégivrage. L'extrémité de blocage 23 s'étend quant à elle en appui radial orienté vers l'intérieur sur une face interne 10int de la paroi intérieure 10. Plus précisément, la deuxième rainure 25 de l'extrémité de blocage 23 coopère par complémentarité de formes avec l'extrémité amont 16 de l'ouverture 14, et plus précisément avec un bord 17 de l'extrémité amont 16 qui s'étend en saillie vers l'amont. L'extrémité de blocage 23 assure avantageusement à elle seule le maintien en position de déviation P2 de sorte que l'extrémité de décollement 22 n'exerce aucun appui sur la paroi intérieure 10. Ceci favorise sa pérennité. Comme illustré sur la figure 5D, dans la position de déviation P2, l'entrée d'air 1 comporte une section intérieure convergente pour le flux d'air inverse F-INV, formant avantageusement un convergent de tuyère.

L'extrémité de décollement 22, qui est fine, n'est pas sollicitée pour maintenir l'organe mobile 2 en position. L'extrémité de blocage 23, plus épaisse, permet de maintenir l'organe mobile 2 en position.

Pour résumer, l'entrée d'air 1 à géométrie variable de l'invention comprend des organes mobiles 2 montés pivotants dans des ouvertures 14 de manière à ce que, soit la paroi de couverture 20 (position de couverture P1), soit la paroi de déviation 21 (position de déviation P2), obstrue l'ouverture 14. Les performances en phase d'inversion de poussée B sont avantageusement améliorées, car le flux d'air inverse F-INV_{D}, au lieu d'épouser le contour de l'entrée d'air 1, est dévié pour s'opposer dans sa totalité au flux d'air amont F, ce qui favorise le freinage. En outre, ceci évite de former une boucle de flux d'air inverse collé F-INV_{C} indésirable comme dans l'art antérieur (voir figure 1B). L'aérodynamisme est quant à lui préservé en phase de poussée A.

### Procédé d'utilisation

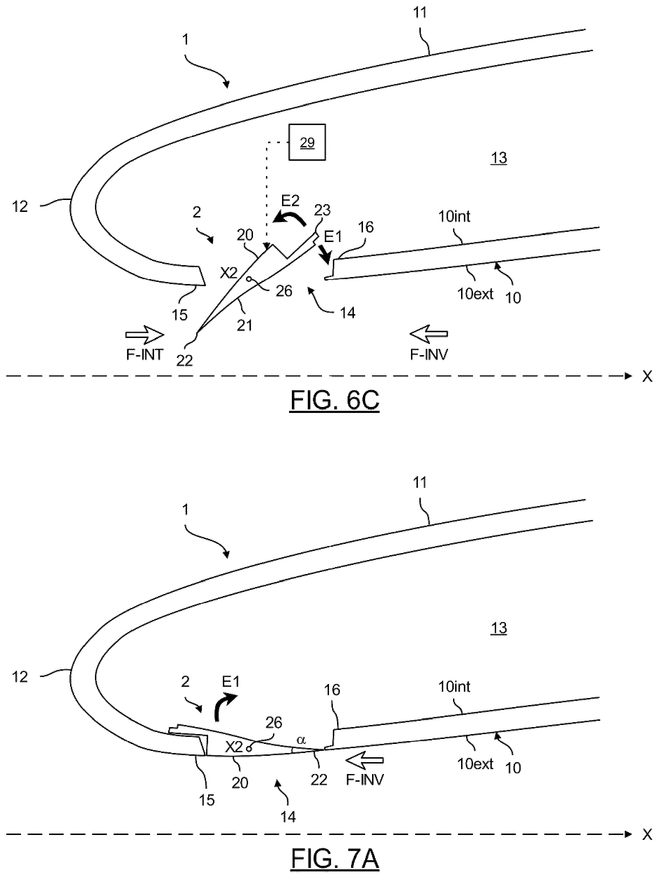

En référence aux figures 6A, 6B et 6C, on décrit par la suite un procédé d'utilisation de l'entrée d'air 1 précédemment décrite. On considère dans un premier temps la turbomachine 7 en phase de poussée A et les organes mobiles 2 en position de couverture P1 (voir figure 2A). Lors d'une phase d'inversion de poussée B, l'angle de calage des aubes de la soufflante 4 est modifié ce qui génère un flux d'air inverse F-INV dans la veine secondaire 6 (voir figure 2B). Comme illustré successivement de la figure 6A à la figure 6C, l'organe de commandement actif 29 déplace lors d'un déplacement E1 chaque organe mobile 2 en position de déviation P2 par simple pivotement d'un demi-tour. Le déplacement est avantageusement favorisé par l'effort exercé par le flux d'air inverse F-INV circulant d'aval en amont sur l'extrémité de décollement 22 s'étendant intérieurement. L'extrémité de blocage 23 s'étend quant à elle extérieurement, dans la cavité annulaire 13 de l'entrée d'air 1, à l'abri du flux d'air inverse F-INV.

Par la suite, lors d'une nouvelle phase de poussée A, l'angle de calage des aubes de la soufflante 4 est de nouveau modifié ce qui génère un flux d'air intérieur F-INT dans la veine secondaire 6 (voir figure 2A) et stoppe le flux d'air inverse F-INV. Comme illustré successivement de la figure 6C à la figure 6A, l'organe de commandement actif 29 déplace lors d'un déplacement E2 chaque organe mobile 2 en position de couverture P1 par simple pivotement inverse d'un demi-tour. Le déplacement est avantageusement favorisé par l'effort exercé par le flux d'air intérieur F-INT circulant d'amont en aval sur l'extrémité de décollement 22 s'étendant intérieurement. L'extrémité de blocage 23 s'étend quant à elle extérieurement, dans la cavité annulaire 13 de l'entrée d'air 1, à l'abri du flux d'air intérieur F-INT.

Les déplacements E1, E2 des organes mobiles 2 entre la position de couverture P1 et la position de déviation P2 sont avantageusement rapides, aisés et reproductibles à volonté.

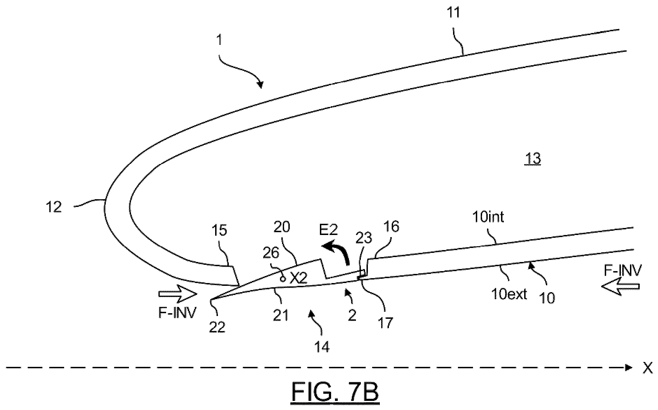

Dans l'exemple des figures 6A, 6B et 6C, le déplacement E1 ou E2 est commandé par l'organe de commandement actif 29. De manière alternative, comme illustré sur les figures 7A et 7B, au moins une partie du déplacement E1 ou E2 pourrait être mise en œuvre de manière passive par le flux d'air intérieur F-INT et le flux d'air inverse F-INV. Dans l'exemple des figures 7A et 7B, les déplacements E1, E2 sont entièrement mis en œuvre de manière passive.

Pour cela, comme illustré sur la figure 7A, en position de couverture P1, un espace réduit est formé entre l'extrémité aval 16 de l'ouverture 14 et l'extrémité de décollement 22 de l'organe mobile 2 de manière à ce que le flux d'air inverse F-INV puisse s'y engouffrer et créer un effet de levier pour amorcer le déplacement E1 de l'organe mobile 2 vers la position de déviation P2. Une fois le déplacement E1 amorcé, l'action du flux d'air inverse F-INV sur la paroi de déviation 21 permet d'obtenir la position de déviation P2. De préférence, l'extrémité de décollement 22 s'étend de manière radialement intérieure par rapport à l'extrémité aval 16, de manière à faciliter le passage de l'air entre l'extrémité de décollement 22 et l'extrémité aval 16 et l'amorcement du déplacement E1.

En référence à la figure 7B, le déplacement E2 de la position de déviation E2 vers la position de couverture E1 est quant à lui assuré par l'action du flux d'air intérieur F-INT sur l'extrémité de décollement 22 au niveau de l'extrémité amont 15 de l'ouverture 14 ainsi que sur la paroi de couverture 20. De manière avantageuse, en position de déviation P2, l'extrémité de décollement 22 s'étend en saillie vers l'intérieur et vers l'amont ce qui permet au flux d'air intérieur F-INT d'exercer un effet de levier et amorcer le déplacement E2.

## Revendications

1. Entrée d'air (1) de nacelle (3) d'ensemble propulsif d'aéronef (8), ledit ensemble propulsif d'aéronef (8) s'étendant selon un axe longitudinal (X) orienté d'amont en aval et comprenant une turbomachine (7) comprenant une veine primaire (5) radialement intérieure et une veine secondaire (6) radialement extérieure configurées pour guider d'amont en aval respectivement un flux d'air primaire (F1) et un flux d'air secondaire (F2) lors d'une phase de poussée (A), ladite turbomachine (7) comprenant à l'amont une soufflante (4) montée rotative autour de l'axe longitudinal (X), ledit ensemble propulsif d'aéronef (8) comprenant des moyens d'inversion de poussée configurés pour modifier le flux d'air secondaire (F2) en un flux d'air inverse (F-INV) circulant d'aval en amont dans la veine secondaire (6) lors d'une phase d'inversion de poussée (B), ladite nacelle (3) s'étendant extérieurement autour de la turbomachine (7) et comprenant à son extrémité amont l'entrée d'air (1), ladite entrée d'air (1) comprenant une paroi intérieure (10) tournée vers l'axe longitudinal (X), une paroi extérieure (11) opposée à la paroi intérieure (10) et une lèvre d'entrée d'air (12) reliant à l'amont la paroi intérieure (10) et la paroi extérieure (11), où:
• la paroi intérieure (10) comprend une pluralité d'ouvertures (14) comprenant une extrémité amont (15) et une extrémité aval (16),
l'entrée d'air étant **caractérisée par le fait qu'**elle comprend une pluralité d'organes mobiles (2), un organe mobile (2) étant monté pivotant dans chaque ouverture (14), chaque organe mobile (2) comprenant une paroi de couverture (20) et une paroi de déviation (21) opposée à la paroi de couverture (20) et étant configuré pour pivoter entre :
∘ une position de couverture (P1), dans laquelle la paroi de couverture (20) est tournée vers l'axe longitudinal (X), obstrue l'ouverture (14) et s'étend dans le prolongement de la paroi intérieure (10) de manière à guider le flux d'air secondaire (F2) afin de favoriser une phase de poussée (A), et
∘ une position de déviation (P2), dans laquelle la paroi de déviation (21) est tournée vers l'axe longitudinal (X), obstrue l'ouverture (14) et est configurée pour décoller le flux d'air inverse (F-INV) afin de favoriser une phase d'inversion de poussée (B).

2. Entrée d'air (1) selon la revendication 1, dans laquelle chaque organe mobile (2) comprend une extrémité de décollement (22) reliant la paroi de couverture (20) et la paroi de déviation (21), ladite extrémité de décollement (22) étant configurée, en position de déviation (P2), pour s'étendre de manière radialement intérieure par rapport à la paroi intérieure (11)

3. Entrée d'air (1) selon la revendication 2, dans laquelle l'extrémité de décollement (22) comporte une forme pointue, de préférence d'angle inférieur à 30°.

4. Entrée d'air (1) selon l'une des revendications 2 et 3, dans laquelle l'extrémité de décollement (22) est configurée, en position de couverture (P1), pour s'étendre de manière adjacente à l'extrémité aval (16).

5. Entrée d'air (1) selon l'une des revendications 1 à 4, dans laquelle chaque organe mobile (2) comprend une extrémité de blocage (23) qui relie la paroi de couverture (20) et la paroi de déviation (21), ladite extrémité de blocage (23) étant configurée pour coopérer avec l'extrémité amont (15) en position de couverture (P1) et avec l'extrémité aval (16) en position de déviation (P2).

6. Entrée d'air (1) selon la revendication 5, dans laquelle l'extrémité de blocage (23) est configurée pour se déplacer de manière radialement extérieure à la paroi intérieure (11) entre la position de couverture (P1) et la position de déviation (P2).

7. Entrée d'air (1) selon l'une des revendications 1 à 6, dans laquelle chaque organe mobile (2) est monté mobile autour d'un pivot (26) d'axe de pivotement (X2) tangent à la paroi intérieure (11) et appartenant à un plan transversal à l'axe longitudinal (X).

8. Entrée d'air (1) selon la revendication 7, dans laquelle l'organe mobile (2) s'étend de part et d'autre du pivot (26), le pivot (26) étant de préférence monté plus proche de l'extrémité amont (15) que de l'extrémité aval (16) de l'ouverture (14).

9. Ensemble propulsif d'aéronef (8) s'étendant selon un axe longitudinal (X) orienté d'amont en aval et comprenant une turbomachine (7) comprenant une veine primaire (5) radialement intérieure et une veine secondaire (6) radialement extérieure configurées pour guider d'amont en aval respectivement un flux d'air primaire (F1) et un flux d'air secondaire (F2) lors d'une phase de poussée (A), ladite turbomachine (7) comprenant à l'amont une soufflante (4) montée rotative autour de l'axe longitudinal (X), ledit ensemble propulsif d'aéronef (8) comprenant des moyens d'inversion de poussée configurés pour modifier le flux d'air secondaire (F2) en un flux d'air inverse (F-INV) circulant d'aval en amont dans la veine secondaire (6) lors d'une phase d'inversion de poussée (B), ladite nacelle (3) s'étendant extérieurement autour de la turbomachine (7) et comprenant à son extrémité amont une entrée d'air (1) selon l'une des revendications 1 à 8, la soufflante (4) comportant de préférence des aubes à calage variable de manière à former les moyens d'inversion de poussée.

10. Procédé d'utilisation d'une entrée d'air (1) d'ensemble propulsif d'aéronef (8) selon l'une des revendications 1 à 8, dans laquelle chaque organe mobile (2) est initialement en position de couverture (P1) de manière à guider le flux d'air secondaire (F2) afin de favoriser une phase de poussée (A), ledit procédé comprenant, lors d'une phase d'inversion de poussée (B), un déplacement (E1) de chaque organe mobile (2) en position de déviation (P2) de manière à décoller le flux d'air inverse (F-INV).

## Patentansprüche

1. Lufteinlass (1) einer Gondel (3) einer Flugzeugantriebseinheit (8), wobei sich die Flugzeugantriebseinheit (8) gemäß einer von stromaufwärts nach stromabwärts ausgerichteten Längsachse (X) erstreckt und eine Turbomaschine (7) umfasst, die einen radial inneren Primärkanal (5) und einen radial äußeren Sekundärkanal (6) umfasst, die ausgelegt sind, um während einer Schubphase (A) jeweils einen Primärluftstrom (F1) und einen Sekundärluftstrom (F2) von stromaufwärts nach stromabwärts zu leiten, wobei die Turbomaschine (7) stromaufwärts ein Gebläse (4) umfasst, das um die Längsachse (X) rotatorisch angebracht ist, wobei die Flugzeugantriebseinheit (8) Schubumkehrmittel umfasst, die ausgelegt sind, um den Sekundärluftstrom (F2) in einen umgekehrten Luftstrom (F-INV) umzuwandeln, der während einer Schubumkehrphase (B) von stromabwärts nach stromaufwärts im Sekundärkanal (6) zirkuliert, wobei sich die Gondel (3) außen um die Turbomaschine (7) erstreckt und an ihrem stromaufwärtigen Ende den Lufteinlass (1) umfasst, wobei der Lufteinlass (1) eine zur Längsachse (X) gerichtete Innenwand (10), eine der Innenwand (10) gegenüberliegende Außenwand (11) und eine Lufteinlasslippe (12) umfasst, die stromaufwärts die Innenwand (10) und die Außenwand (11) verbindet, wobei:
• die Innenwand (10) eine Vielzahl von Öffnungen (14) umfasst, die ein stromaufwärtiges Ende (15) und ein stromabwärtiges Ende (16) umfassen,
wobei der Lufteinlass **dadurch gekennzeichnet ist, dass** er eine Vielzahl beweglicher Elemente (2) umfasst, wobei ein bewegliches Element (2) schwenkbar in jeder Öffnung (14) angebracht ist, wobei jedes bewegliche Element (2) eine Abdeckwand (20) und eine der Abdeckwand (20) gegenüberliegende Umlenkwand (21) umfasst und ausgelegt ist, um zu schwenken zwischen:
∘ einer Abdeckposition (P1), in der die Abdeckwand (20) zur Längsachse (X) zeigt, die Öffnung (14) verschließt und sich in Verlängerung der Innenwand (10) derart erstreckt, dass der Sekundärluftstrom (F2) so gelenkt wird, dass er eine Schubphase (A) begünstigt, und
∘ einer Umlenkposition (P2), in der die Umlenkwand (21) zur Längsachse (X) zeigt ist, die Öffnung (14) verschließt und ausgelegt ist, um den umgekehrten Luftstrom (F-INV) abzureißen, um eine Schubumkehrphase (B) zu begünstigen.

2. Lufteinlass (1) nach Anspruch 1, wobei jedes bewegliche Element (2) ein Abrissende (22) umfasst, das die Abdeckwand (20) und die Umlenkwand (21) verbindet, wobei das Abrissende (22) in der Umlenkposition (P2) derart ausgelegt ist, dass es sich relativ zur Innenwand (11) radial erstreckt.

3. Lufteinlass (1) nach Anspruch 2, wobei das Abrissende (22) eine spitze Form aufweist, vorzugsweise mit einem Winkel von weniger als 30°.

4. Lufteinlass (1) nach einem der Ansprüche 2 und 3, wobei das Abrissende (22) in der Abdeckposition (P1) derart ausgelegt ist, dass es sich benachbart zum stromabwärtigen Ende (16) erstreckt.

5. Lufteinlass (1) nach einem der Ansprüche 1 bis 4, wobei jedes bewegliche Element (2) ein Sperrende (23) umfasst, das die Abdeckwand (20) und die Umlenkwand (21) verbindet, wobei das Sperrende (23) derart ausgelegt ist, dass es in der Abdeckposition (P1) mit dem stromaufwärtigen Ende (15) und in der Umlenkposition (P2) mit dem stromabwärtigen Ende (16) zusammenwirkt.

6. Lufteinlass (1) nach Anspruch 5, wobei das Sperrende (23) derart ausgelegt ist, dass es sich zwischen der Abdeckposition (P1) und der Umlenkposition (P2) radial außerhalb der Innenwand (11) bewegt.

7. Lufteinlass (1) nach einem der Ansprüche 1 bis 6, wobei jedes bewegliche Element (2) um einen Drehpunkt (26) mit einer Drehachse (X2) beweglich angebracht ist, die tangential zur Innenwand (11) verläuft und zu einer Ebene quer zur Längsachse (X) gehört.

8. Lufteinlass (1) nach Anspruch 7, wobei sich das bewegliche Element (2) zu beiden Seiten des Drehpunkts (26) erstreckt, wobei der Drehpunkt (26) vorzugsweise näher am stromaufwärtigen Ende (15) als am stromabwärtigen Ende (16) der Öffnung (14) angebracht ist.

9. Flugzeugantriebseinheit (8), die sich gemäß einer von stromaufwärts nach stromabwärts ausgerichteten Längsachse (X) erstreckt und eine Turbomaschine (7) umfasst, die einen radial inneren Primärkanal (5) und einen radial äußeren Sekundärkanal (6) umfasst, die ausgelegt sind, um während einer Schubphase (A) jeweils einen Primärluftstrom (F1) und einen Sekundärluftstrom (F2) von stromaufwärts nach stromabwärts zu leiten, wobei die Turbomaschine (7) stromaufwärts ein Gebläse (4) umfasst, das um die Längsachse (X) rotatorisch angebracht ist, wobei die Flugzeugantriebseinheit (8) Schubumkehrmittel umfasst, die ausgelegt sind, um den Sekundärluftstrom (F2) in einen umgekehrten Luftstrom (F-INV) umzuwandeln, der während einer Schubumkehrphase (B) von stromabwärts nach stromaufwärts im Sekundärkanal (6) zirkuliert, wobei sich die Gondel (3) außen um die Turbomaschine (7) erstreckt und an ihrem stromaufwärtigen Ende einen Lufteinlass (1) nach einem der Ansprüche 1 bis 8 umfasst, wobei das Gebläse (4) vorzugsweise Schaufeln umfasst, die derart variabel verstellbar sind, dass sie die Schubumkehrmittel bilden.

10. Verfahren zur Verwendung eines Lufteinlasses (1) einer Flugzeugantriebseinheit (8) nach einem der Ansprüche 1 bis 8, wobei sich jedes bewegliche Element (2) zunächst in einer Abdeckposition (P1) befindet, so dass der Sekundärluftstrom (F2) so gelenkt wird, dass eine Schubphase (A) begünstigt wird, wobei das Verfahren während einer Schubumkehrphase (B) eine Bewegung (E1) jedes beweglichen Elements (2) in eine Umlenkposition (P2) derart umfasst, dass der umgekehrte Luftstrom (F-INV) abreißt.

## Claims

1. Air inlet (1) of a nacelle (3) of an aircraft propulsion unit (8), said aircraft propulsion unit (8) extending along a longitudinal axis (X) oriented from upstream to downstream and comprising a turbine engine (7) comprising a radially inner primary duct (5) and a radially outer bypass duct (6) configured to guide from upstream to downstream respectively a primary air flow (F1) and a bypass air flow (F2) during a thrust phase (A), said turbine engine (7) comprising upstream a fan (4) rotatably mounted about the longitudinal axis (X), said aircraft propulsion unit (8) comprising thrust inversion means configured to modify the bypass air flow (F2) into a reverse air flow (F-INV) circulating from downstream to upstream in the bypass duct (6) during a thrust reversal phase (B), said nacelle (3) extending outwardly around the turbine engine (7) and comprising at its upstream end the air inlet (1), said air inlet (1) comprising an inner wall (10) turned towards the longitudinal axis (X), an outer wall (11) opposite the inner wall (10) and an air inlet lip (12) connecting upstream the inner wall (10) and the outer wall (11), wherein:
• the inner wall (10) comprises a plurality of openings (14) comprising an upstream end (15) and a downstream end (16), the air inlet being **characterized in that** it comprises a plurality of mobile members (2), a mobile member (2) being mounted pivoting in each opening (14), each mobile member (2) comprising a covering wall (20) and a deflecting wall (21) opposite the covering wall (20) and being configured to pivot between:
∘ a covering position (P1), wherein the covering wall (20) is turned towards the longitudinal axis (X), obstructs the opening (14) and extends along the inner wall (10) so as to guide the bypass air flow (F2) in order to promote a thrust phase (A), and
∘ a deflecting position (P2), wherein the deflecting wall (21) is turned towards the longitudinal axis (X), obstructs the opening (14) and is configured to separate the reverse air flow (F-INV) in order to promote a thrust reversal phase (B).

2. Air inlet (1) according to claim 1, wherein each mobile member (2) comprises a separating end (22) connecting the covering wall (20) and the deflecting wall (21), said separating end (22) being configured, in the deflecting position (P2), to extend radially inward with respect to the inner wall (11)

3. Air inlet (1) according to claim 2, wherein the separating end (22) comprises a pointed shape, preferably an angle of less than 30°.

4. Air inlet (1) according to one of claims 2 and 3, wherein the separating end (22) is configured, in the covering position (P1), to extend adjacent to the downstream end (16).

5. Air inlet (1) according to one of claims 1 to 4, wherein each mobile member (2) comprises a blocking end (23) that connects the covering wall (20) and the deflecting wall (21), said blocking end (23) being configured to cooperate with the upstream end (15) in the covering position (P1) and with the downstream end (16) in the deflecting position (P2).

6. Air inlet (1) according to claim 5, wherein the blocking end (23) is configured to move radially outwards to the inner wall (11) between the covering position (P1) and the deflecting position (P2).

7. Air inlet (1) according to one of claims 1 to 6, wherein each mobile member (2) is mounted mobile around a pivot (26) of pivot axis (X2) tangential to the inner wall (11) and belonging to a plane transverse to the longitudinal axis (X).

8. Air inlet (1) according to claim 7, wherein the mobile member (2) extends on either side of the pivot (26), the pivot (26) preferably being mounted closer to the upstream end (15) than to the downstream end (16) of the opening (14).

9. Aircraft propulsion unit (8) extending along a longitudinal axis (X) oriented from upstream to downstream and comprising a turbine engine (7) comprising a radially inner primary duct (5) and a radially outer bypass duct (6) configured to guide from upstream to downstream respectively a primary air flow (F1) and a bypass air flow (F2) during a thrust phase (A), said turbine engine (7) comprising upstream a fan (4) rotatably mounted about the longitudinal axis (X), said aircraft propulsion unit (8) comprising thrust inversion means configured to modify the bypass air flow (F2) into a reverse air flow (F-INV) circulating from downstream to upstream in the bypass duct (6) during a reverse thrust phase (B), said nacelle (3) extending outwardly around the turbine engine (7) and comprising at its upstream end an air inlet (1) according to one of claims 1 to 8, the fan (4) preferably comprising variable-pitch blades so as to form the thrust reversal means.

10. Method for using an air inlet (1) of an aircraft propulsion unit (8) according to one of claims 1 to 8, wherein each mobile member (2) is initially in the covering position (P1) so as to guide the bypass air flow (F2) in order to promote a thrust phase (A), said method comprising, during a thrust reversal phase (B), a movement (E1) of each mobile member (2) in the deflecting position (P2) so as to separate the reverse air flow (F-INV).
